# EUROPEAN PATENT SPECIFICATION

(11) **EP 3 849 857 B1**
(45) Date of publication and mention of the grant of the patent: **23.08.2023**
(21) Application number: 19766239.8
(22) Date of filing: 10.09.2019
(51) Int. Cl.: B60S 1/52, B60S 1/54, B60S 1/38, B60S 1/40, B05B 7/00

(54) **WIPER BLADE AND WIPER SYSTEM TO CLEAN A VEHICLE WINDOW, AND METHOD TO GENERATE A CLEANING FOAM**
WISCHERBLATT UND WISCHERANLAGE ZUM REINIGEN EINES FAHRZEUGFENSTERS SOWIE VERFAHREN ZUR ERZEUGUNG EINES REINIGUNGSSCHAUMS
BALAI D'ESSUIE-GLACE ET SYSTÈME D'ESSUYAGE DESTINÉS À NETTOYER UNE VITRE DE VÉHICULE, ET PROCÉDÉ DESTINÉ À GÉNÉRER UNE MOUSSE DE NETTOYAGE

(30) Priority: 10.09.2018 DE 102018121985
(43) Date of publication of application: 21.07.2021
(73) Proprietor: Valeo Systèmes d'Essuyage, 78322 Le Mesnil Saint Denis (FR)
(72) Inventor: BUSS, Michael, 74321 Bietigheim-Bissingen (DE); SCHOLL, Wolfgang, 74321 Bietigheim-Bissingen (DE)
(74) Representative: Valeo Visibility
(86) International application number: PCT/EP2019/074047
(87) International publication number: WO 2020/053183

(56) References cited:
- DE-A1- 19 605 927
- DE-A1- 19 854 127
- DE-A1-102008 042 405
- DE-A1-102014 118 184
- KR-A- 20150 130 190
- US-A1- 2009 211 605

## Description

### Prior art

The invention relates to a wiper blade to clean a vehicle window, having the features of the preamble of Claim 1. The invention furthermore relates to a wiper system using a wiper blade according to the invention, as well as to a method to generate a cleaning foam.

A wiper blade having the features of the preamble of Claim 1 is known from DE 196 05 927.

Another known wiper blade from DE 10 2013 112 712 A1 of the applicant is characterized by spray openings for spraying the cleaning medium on a vehicle window, said spray openings being arranged on the longitudinal sides of the wiper blade body. A liquid such as water is typically used as the cleaning medium herein, said liquid optionally having additives or admixtures added to it for achieving a better cleaning effect. The feeding of the cleaning medium to the spray openings on the wiper blade body herein is performed in the region of a wiper blade adapter as a component part of the wiper blade with which the wiper blade can be fastened to a wiper arm. To this end, the wiper blade adapter has a supply element which typically connects the at least one spray opening to a tube which in turn is connected to a storage container for the cleaning liquid in the engine bay.

### Disclosure of the invention

The wiper blade according to the invention to clean a vehicle window having the features of Claim 1 has the advantage that a cleaning foam can be generated by way of said wiper blade, said cleaning foam having a better cleaning effect in comparison to a cleaning liquid even when the latter is provided with additives. The cleaning foam herein is composed of a typically liquid cleaning medium which has the foam-type consistency by foaming with air. It has been demonstrated in experiments that a cleaning foam of this type in the case of the same quantity of cleaning liquid has an improved cleaning effect as compared to the cleaning liquid. This enables in particular the size of the storage container for the cleaning medium, or the cleaning liquid, respectively, to be reduced. On the one hand, the required installation space for the storage container that is usually provided in the engine bay of the motor vehicle is reduced herein. Furthermore, the mass, or the weight, respectively, of the field storage container is reduced in a manner corresponding to the reduced quantity of liquid cleaning agent.

To this end, the teaching of the invention according to Claim 1 proposes that the supply element which supplies the at least one spray opening with the cleaning medium is additionally enhanced by a device to supply air and by a mixing device to generate a cleaning foam as a cleaning medium, the cleaning medium being composed of the cleaning liquid and the air. In other words, this means that the cleaning foam is generated in the direct wiper blade region, or in the region of the supply element, respectively, by physically mixing the liquid cleaning agent with air, said physical mixing taking place in the form of foaming. On account of the cleaning foam being generated in the direct proximity of the wiper blade, said cleaning foam by way of the at least one spray opening can be applied immediately, or within the shortest time possible, to the vehicle window. On account thereof, the risk of any potential disintegration of the cleaning foam on its transport path up to the at least one spray opening is minimized.

Advantageous refinements of the wiper blade according to the invention to clean a vehicle window are set forth in the dependent claims.

In a specific constructive design embodiment of the mixing device, said mixing device has a Venturi nozzle through which the cleaning liquid can be supplied, and the device to supply the air preferably discharges at an output area of the Venturi nozzle.

In the refinement of the proposal set forth last, it is specifically provided that the output area is connected to the ambient environment by means of the supply channel. The supply channel enables the output area of the Venturi nozzle in terms of the location of said output area in the supply element to thus be designed in a relatively variable manner.

In order for the various functions in the supply element to be able to be implemented in a simple manner in terms of production technology, it is preferably provided that said supply element is composed of plastic and is designed as an injection-moulded part.

The wiper blade in terms of construction can also be designed in various ways. It is preferably provided that a plurality of spray openings are assigned to each longitudinal side of the wiper blade body of the wiper blade, that the spray openings assigned to the one longitudinal side are connected to the supply element by means of one supply channel respectively formed in the wiper blade body, and that within the supply element a device to supply air and a mixing device to generate a cleaning foam has a cleaning medium composed of the cleaning liquid and the air is assigned to each longitudinal side of the wiper blade body respectively.

In particular, this enables cleaning foam for spraying on the vehicle window to be made available in each case in the movement of the wiper blade in different wiping directions along the vehicle window.

The invention furthermore also comprises a wiper system to clean a vehicle window, wherein the wiper system has a wiper blade according to the invention as has been described so far. The wiper system furthermore comprises a wiper arm on which the wiper blade can be connected in a replaceable manner by means of the wiper blade adapter, as well as a supply device to supply pressurized cleaning liquid to the supply element in the wiper blade, wherein the supply device has a storage container for the cleaning liquid that is connected to a conveyor pump.

Finally, the invention also comprises a method for generating a cleaning foam to clean a vehicle window made of a cleaning fluid and air, by means of a wiper blade according to the invention as has been described so far, it being provided that the cleaning foam is generated in a wiper blade adapter in the wiper blade.

In order to improve the foam generation, it can be provided that foaming agents are added as additives to the liquid cleaning agent.

Further advantages, features, and details of the invention are derived from the description hereunder of preferred exemplary embodiments as well as by means of the drawing in which:
- Fig. 1: shows the substantial component parts of a wiper system to clean a vehicle window in a simplified illustration;
- Fig. 2: shows a perspective view onto a wiper blade adapter;
- Fig. 3: shows a perspective illustration of a supply element provided in the wiper blade adapter according to Fig. 2 for generating a cleaning foam;
- Fig. 4: shows a longitudinal section through the supply element according to Fig. 3; and
- Fig. 5: shows a perspective view from below onto the wiper blade adapter according to Fig. 1.

Identical elements, or a elements with identical function, respectively, are provided with the same reference signs in the figures.

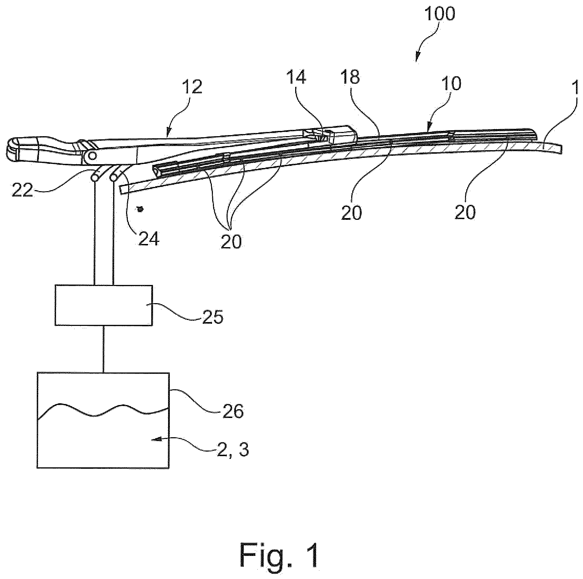

The substantial component parts of the wiper system 100 to clean a vehicle window 1 are illustrated in Fig. 1. The wiper system 100 comprises a wiper blade 10 which is connected in a replaceable manner on a wiper arm 12 that is movable between two reversing positions along the vehicle window 1. The wiper arm 12 in a manner known per se is at least indirectly moved by means of a screen wiper motor (not illustrated). The wiper blade 10 is connected to the wiper arm 12 by means of a wiper blade adapter 14 that is usually composed of two elements, wherein the two elements of the wiper blade adapter 14 are arranged so as to be movable relative to one another in a pivot axis so as to enable a steady uniform contact of the wiper blade 10 on the vehicle window 1 when the wiper blade 10 moves along the vehicle window 1. In the figures, only the one element 16 of the wiper blade adapter 14 that is connected to the wiper blade 10 is illustrated, while the other element of the wiper blade adapter 14 that is connected to the wiper arm 12 is not illustrated for reasons of simplicity.

The wiper blade 10 has a wiper blade body 18 which is connected to the wiper blade adapter 14, a plurality of spray openings 20 spraying a cleaning medium on the vehicle window 1 being in each case arranged on both longitudinal sides of said wiper blade body 18, wherein the spray openings 20 on the one side of the wiper blade body 18 can only be seen in Fig. 1. The spray openings 20 are in each case connected to the wiper blade adapter 14 by means of one supply channel (not illustrated) that is assigned to the respective longitudinal side of the wiper blade body 18, the supply of the cleaning medium to the spray openings 20 taking place by way of said supply channel. Two supply tubes 20, 24 are furthermore arranged, or guided, respectively, in the wiper arm 12, said supply tubes 22, 24 being hydraulically connected to the respective longitudinal side of the wiper blade body 18, or the spray openings 20 provided thereon, respectively, by way of the wiper blade adapter 14.

The two supply tubes 22, 24 by way of an intervening conveyor pump 25 are connected to a storage container 26 for a cleaning liquid 2. The cleaning liquid 2 herein is composed substantially of water as well as preferably a foaming agent 3 and optionally other additives or admixtures that increase the cleaning effect, respectively.

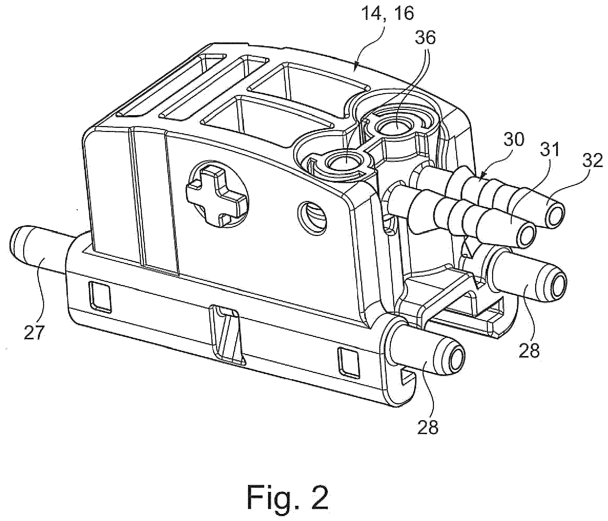

The element 16 of the wiper blade adapter 14 that is connected to the wiper blade body 18 is illustrated in individual illustration in Fig. 2. Two connection nozzles 27, 28 can in particular be seen on each of the two longitudinal sides of the wiper blade adapter 14, said connection nozzles 27, 28 protruding in opposing openings of the supply channels of the wiper blade body 18 in order for the spray openings 20 be supplied with the cleaning medium. The hydraulic supply of the connection nozzles 27, 28 takes place by means of a supply element 30 which is arranged in a recess of the element 16 and which in turn has two connection nozzles 31, 32 as connection elements which are connected to the supply tubes 22, 24. The wiper blade adapter 14, or the element 16, respectively, as well as the supply element 30 are composed of plastic and are designed as injection-moulded parts.

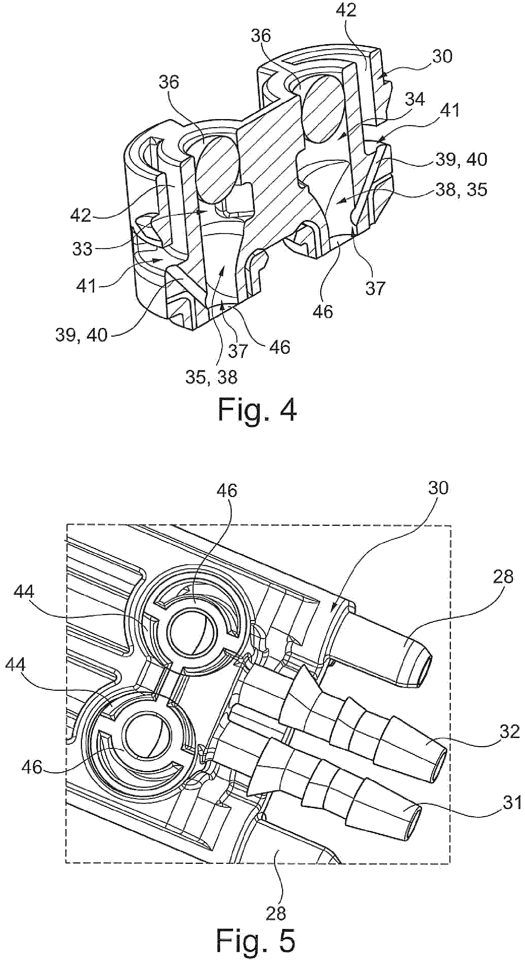

As can best be seen by means of Fig. 4, the supply element 30 has recesses 33, 34 which are in each case assigned to the respective connection nozzles 31, 32 and which on the upper side for reasons of ease of production are sealed towards the outside by means of a metallic ball closure 36. The two recesses 33, 34 which are in each case of identical design, in the direction of the connection nozzles 27, 28 have in each case a cross section that decreases in the flow direction, wherein the recesses 33, 34 there are designed in the form of Venturi nozzles 38 as part of a mixing device 35 for generating a cleaning foam. The design as a Venturi nozzle 38 when conveying the cleaning liquid 2 and the foaming agent 3 causes an increase in the flow rate of the cleaning liquid 2 and of the following agent 3 while simultaneously reducing pressure.

A supply channel 39 of a device 40 for supplying ambient air opens into the Venturi nozzle 38 approximately at the location of the smallest cross-section of the Venturi nozzle 38, or at an output area 37 of the Venturi nozzle 38, respectively. The supply channel 39 opens out at an opening 41 which is designed in the external wall of the supply element 30 and in the axial direction forms part of an annular channel 42.

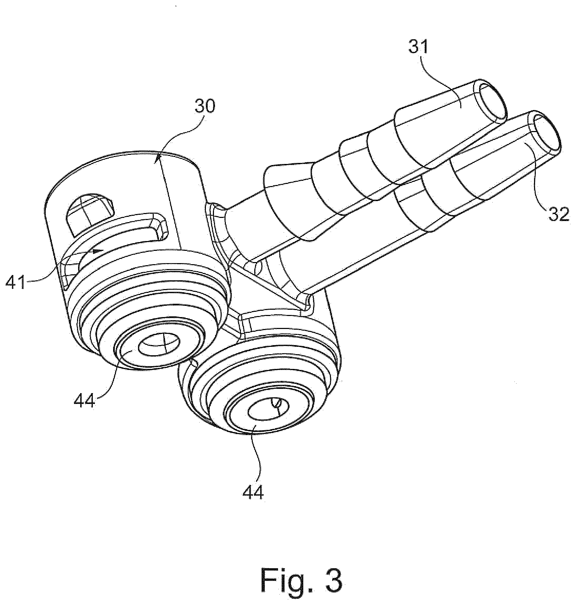

According to the illustrations of Figs. 3 and 5, a filter element 44 in the form of a membrane 46 is in each case arranged after the mixing devices 35 on that side of the recesses 33, 34 that faces away from the closure balls 36, said filter elements 44 causing renewed mixing of the cleaning liquid 2 with the air. The filter elements 44 furthermore have the effect that no foreign objects which could potentially block the spray openings 20 can make their way into the supply channels of the wiper blade body 18. Furthermore, check valves (not illustrated) can be provided, said check valves having the effect that no cleaning medium makes its way by way of the devices 40 outside into the environment in the event of a non-activated conveyor pump 25.

Mixing of the cleaning liquid 2 and of the foaming agent 3 with ambient air that is supplied by way of the device 40 takes place on account of the supply element 30, or the Venturi nozzles 38, respectively, when conveying the cleaning liquid 2 and the foaming agent 3. This has the effect of foaming the cleaning liquid 2 and the foaming agent 3 so as to form a cleaning foam, in particular when using foaming agents 3 in the cleaning liquid 2. This cleaning foam by way of the spray openings 20 makes its way onto the vehicle window 1 and causes an improved cleaning effect as compared to a cleaning liquid 2 alone.

The wiper system 100 and the wiper blade 10, respectively, described so far can be varied or modified, respectively, in diverse ways without deviating from the concept of the invention. Said concept of the invention lies in generating a cleaning foam on account of mixing, or foaming, respectively, a cleaning liquid 2, in particular on account of the foaming agent 3, with air in the region of the wiper blade adapter 14, said cleaning foam by way of the wiper blade body 18 being supplied to the spray openings 20 to spray the cleaning foam on the vehicle window 1.

### List of reference signs

- 1: Vehicle window
- 2: Cleaning liquid
- 3: Foaming agent

- 10: Wiper blade
- 12: Wiper arm
- 14: Wiper blade adapter
- 16: Element of the wiper blade adapter
- 18: Wiper blade body
- 20: Spray opening
- 22: Supply tube
- 24: Supply tube
- 25: Conveyor pump
- 26: Storage container
- 27: Connection nozzle
- 28: Connection nozzle
- 30: Supply element
- 31: Connection nozzle
- 32: Connection nozzle
- 33: Recess
- 34: Recess
- 35: Mixing device
- 36: Ball closure
- 37: Output area
- 38: Venturi nozzle
- 39: Supply channel
- 40: Device for supplying ambient air
- 41: Opening
- 42: Annular channel
- 44: Filter element
- 46: Membrane

- 100: Wiper system

## Claims

1. Wiper blade (10) to clean a vehicle window (1), with a wiper blade body (18), with a wiper blade adapter (14) to fasten the wiper blade (10) to a wiper arm (12), with a supply element (30) having at least one connection element (31, 32) to supply at least one cleaning liquid (2) to the supply element (30), the supply element (30) having a device (40) to supply air and a mixing device (35) to generate a cleaning foam as a cleaning medium, the cleaning medium being composed of the cleaning liquid (2) and the air,
**characterized in that** the wiper blade comprises at least one spray opening (20) arranged on a longitudinal side of the wiper blade body (18) for spraying the cleaning medium on the vehicle window (1), wherein the at least one spray opening (20) is hydraulically connected to the supply element (30), and **in that** the supply element (30) is part of the wiper blade adapter (14).

2. Wiper blade according to Claim 1, **characterized in that** the mixing device (35) has a Venturi nozzle (38) through which the cleaning liquid (2) can be supplied, and that the device (40) to supply the air preferably discharges at an output area (37) of the Venturi nozzle (38).

3. Wiper blade according to Claim 2, **characterized in that** the output area (37) is connected to the ambient environment by means of a supply channel (39).

4. Wiper blade according to one of Claims 1 to 3, **characterized in that** that a filter element (44) follows the mixing device (35).

5. Wiper blade according to Claim 4, **characterized in that** the filter element (44) is designed in the form of a membrane (46).

6. Wiper blade according to one of the Claims 1 to 5, **characterized in that** the supply element (30) is made of plastic and is designed as an injection-moulded part.

7. Wiper blade according to one of the Claims 1 to 6, **characterized in that** the at least one connection element (31, 32) can be connected to a conveyor pump (25) for conveying the cleaning fluid (2) by means of at least one supply tube (22, 24) to convey the cleaning liquid (2) out of a storage container (26).

8. Wiper blade according to one of the Claims 1 to 7, **characterized in that** a plurality of spray openings (20) are assigned to each longitudinal side of the wiper blade body (18), that the spray openings (20) assigned to the one longitudinal side are connected to the supply element (30) by means of one supply channel respectively formed in the wiper blade body (18) and that, within the supply element (30), a device (40) to supply air and a mixing device (35) to generate a cleaning foam as a cleaning medium composed of the cleaning liquid (2) and the air is assigned to each longitudinal side of the wiper blade body (18) respectively.

9. Wiper system (100) to clean a vehicle window (1) with a wiper blade (10), which is designed according to one of the Claims 1 to 8, a wiper arm (12), on which the wiper blade (10) can be connected in a replaceable manner by means of the wiper blade adapter (14) in order to supply a pressurized cleaning fluid (2) to the supply element (30) by means of a supply device comprising a storage container (26) and a conveyor pump (25).

10. Method to generate a cleaning foam to clean a vehicle window (1) made of a cleaning fluid (2) and air, by means of a wiper blade (10), which is designed according to one of the Claims 1 to 8, **characterized in that** the cleaning foam is generated in a wiper blade adapter (14).

11. Method according to Claim 10, **characterized in that** a foaming agent (3) is added to the cleaning fluid (2).

## Patentansprüche

1. Wischblatt (10) zum Reinigen einer Fahrzeugscheibe (1), mit einem Wischblattkörper (18), mit einem Wischblattadapter (14) zum Befestigen des Wischblatts (10) an einem Wischarm (12), mit einem Versorgungselement (30), das mindestens ein Anschlusselement (31, 32) zum Zuführen zumindest einer Reinigungsflüssigkeit (2) zum Versorgungselement (30) aufweist, wobei das Versorgungselement (30) eine Einrichtung (40) zum Zuführen von Luft und eine Mischeinrichtung (35) zum Erzeugen eines Reinigungsschaums als Reinigungsmedium aufweist, wobei sich das Reinigungsmedium aus der Reinigungsflüssigkeit (2) und der Luft zusammensetzt, **dadurch gekennzeichnet, dass** das Wischblatt wenigstens eine an einer Längsseite des Wischblattkörpers (18) angeordnete Sprühöffnung (20) zum Aufsprühen des Reinigungsmediums auf die Fahrzeugscheibe (1) umfasst, wobei die wenigstens eine Sprühöffnung (20) mit dem Versorgungselement (30) hydraulisch verbunden ist, und dadurch, dass das Versorgungselement (30) Teil des Wischblattadapters (14) ist.

2. Wischblatt nach Anspruch 1, **dadurch gekennzeichnet, dass** die Mischeinrichtung (35) eine Venturidüse (38) aufweist, durch die die Reinigungsflüssigkeit (2) zuführbar ist, und dass die Einrichtung (40) zum Zuführen von Luft vorzugsweise an einem Austrittsbereich (37) der Venturidüse (38) mündet.

3. Wischblatt nach Anspruch 2, **dadurch gekennzeichnet, dass** der Austrittsbereich (37) mittels eines Zuführkanals (39) mit der Umgebung verbunden ist.

4. Wischblatt nach einem der Ansprüche 1 bis 3, **dadurch gekennzeichnet, dass** der Mischeinrichtung (35) ein Filterelement (44) nachgeschaltet ist.

5. Wischblatt nach Anspruch 4, **dadurch gekennzeichnet, dass** das Filterelement (44) in Form einer Membran (46) ausgestaltet ist.

6. Wischblatt nach einem der Ansprüche 1 bis 5, **dadurch gekennzeichnet, dass** das Versorgungselement (30) aus Kunststoff besteht und als Spritzgussteil ausgestaltet ist.

7. Wischblatt nach einem der Ansprüche 1 bis 6, **dadurch gekennzeichnet, dass** das wenigstens eine Anschlusselement (31, 32) mittels wenigstens eines Versorgungsschlauchs (22, 24) mit einer Förderpumpe (25) zum Fördern des Reinigungsfluids (2) zum Fördern der Reinigungsflüssigkeit (2) aus einem Vorratsbehälter (26) verbindbar ist.

8. Wischblatt nach einem der Ansprüche 1 bis 7, **dadurch gekennzeichnet, dass** jeder Längsseite des Wischblattkörpers (18) mehrere Sprühöffnungen (20) zugeordnet sind, dass die einer Längsseite zugeordneten Sprühöffnungen (20) mittels jeweils eines im Wischblattkörper (18) ausgebildeten Versorgungskanals mit dem Versorgungselement (30) verbunden sind, und dass im Versorgungselement (30) jeweils eine Einrichtung (40) zum Zuführen von Luft und eine Mischeinrichtung (35) zum Erzeugen eines Reinigungsschaums als Reinigungsmedium aus der Reinigungsflüssigkeit (2) und der Luft jeder Längsseite des Wischblattkörpers (18) zugeordnet ist.

9. Wischanlage (100) zum Reinigen einer Fahrzeugscheibe (1), mit einem Wischblatt (10), das nach einem der Ansprüche 1 bis 8 ausgestaltet ist, einem Wischarm (12), an dem das Wischblatt (10) mittels des Wischblattadapters (14) austauschbar befestigbar ist, zum Zuführen von unter Druck stehendem Reinigungsfluid (2) zu dem Versorgungselement (30) mit einer einen Vorratsbehälter (26) und eine Förderpumpe (25) umfassenden Versorgungseinrichtung.

10. Verfahren zum Erzeugen eines Reinigungsschaums zum Reinigen einer Fahrzeugscheibe (1) aus einem Reinigungsfluid (2) und Luft mittels eines Wischblatts (10), das nach einem der Ansprüche 1 bis 8 ausgestaltet ist, **dadurch gekennzeichnet, dass** der Reinigungsschaum in einem Wischblattadapter (14) erzeugt wird.

11. Verfahren nach Anspruch 10, **dadurch gekennzeichnet, dass** dem Reinigungsfluid (2) Schaumbildner (3) zugefügt ist.

## Revendications

1. Balai d'essuie-glace (10) pour nettoyer une vitre de véhicule (1), comportant un corps de balai d'essuie-glace (18), comportant un adaptateur de balai d'essuie-glace (14) pour fixer le balai d'essuie-glace (10) à un bras d'essuie-glace (12), comportant un élément d'apport (30) ayant au moins un élément de raccordement (31, 32) pour apporter au moins un liquide nettoyant (2) à l'élément d'apport (30), l'élément d'apport (30) comportant un dispositif (40) pour apporter de l'air et un dispositif de mélange (35) pour générer une mousse nettoyante constituant un produit nettoyant, le produit nettoyant étant composé du liquide nettoyant (2) et de l'air,
**caractérisé en ce que** le balai d'essuie-glace comprend au moins une ouverture de pulvérisation (20) disposée sur un côté longitudinal du corps de balai d'essuie-glace (18) pour pulvériser le produit de nettoyage sur la vitre de véhicule (1), l'au moins une ouverture de pulvérisation (20) étant raccordée hydrauliquement à l'élément d'apport (30), et **en ce que** l'élément d'apport (30) fait partie de l'adaptateur de balai d'essuie-glace (14).

2. Balai d'essuie-glace selon la revendication 1, **caractérisé en ce que** le dispositif de mélange (35) comporte une buse Venturi (38) à travers laquelle est apporté le liquide nettoyant (2), et **en ce que** le dispositif (40) pour apporter l'air expulse de préférence au niveau d'une région de sortie (37) de la buse Venturi (38) .

3. Balai d'essuie-glace selon la revendication 2, **caractérisé en ce que** la région de sortie (37) est raccordée au milieu ambiant au moyen d'un canal d'apport (39) .

4. Balai d'essuie-glace selon l'une des revendications 1 à 3, **caractérisé en ce qu'**un élément formant filtre (44) est situé à la suite du dispositif de mélange (35).

5. Balai d'essuie-glace selon la revendication 4, **caractérisé en ce que** l'élément formant filtre (44) est conçu sous la forme d'une membrane (46).

6. Balai d'essuie-glace selon l'une des revendications 1 à 5, **caractérisé en ce que** l'élément d'apport (30) est fait en plastique et est conçu sous la forme d'une pièce moulée par injection.

7. Balai d'essuie-glace selon l'une des revendications 1 à 6, **caractérisé en ce que** l'au moins un élément de raccordement (31, 32) peut être raccordé à une pompe d'acheminement (25) servant à acheminer le fluide nettoyant (2) au moyen d'au moins un tube d'apport (22, 24) pour acheminer le liquide nettoyant (2) depuis un réservoir (26).

8. Balai d'essuie-glace selon l'une des revendications 1 à 7, **caractérisé en ce qu'**une pluralité d'ouvertures de pulvérisation (20) sont associées à chaque côté longitudinal du corps de balai d'essuie-glace (18), **en ce que** les ouvertures de pulvérisation (20) associées à un côté longitudinal sont raccordées à l'élément d'apport (30) au moyen d'un canal d'apport respectivement formé dans le corps de balai d'essuie-glace (18) et **en ce que**, à l'intérieur de l'élément d'apport (30), un dispositif (40) pour apporter de l'air et un dispositif de mélange (35) pour générer une mousse nettoyante constituant un produit nettoyant composé du liquide nettoyant (2) et de l'air est associé respectivement à chaque côté longitudinal du corps de balai d'essuie-glace (18).

9. Système d'essuie-glace (100) pour nettoyer une vitre de véhicule (1) comportant un balai d'essuie-glace (10), qui est conçu selon l'une des revendications 1 à 8, un bras d'essuie-glace (12), sur lequel le balai d'essuie-glace (10) peut être raccordé de manière remplaçable au moyen de l'adaptateur de balai d'essuie-glace (14) afin d'apporter un fluide nettoyant sous pression (2) à l'élément d'apport (30) au moyen d'un dispositif d'apport comprenant un réservoir (26) et une pompe d'acheminement (25) .

10. Procédé pour générer une mousse nettoyante pour nettoyer une vitre de véhicule (1) constituée d'un fluide nettoyant (2) et d'air, au moyen d'un balai d'essuie-glace (10), qui est conçu selon l'une des revendications 1 à 8, **caractérisé en ce que** la mousse nettoyante est générée dans un adaptateur de balai d'essuie-glace (14).

11. Procédé selon la revendication 10, **caractérisé en ce qu'**un agent moussant (3) est ajouté au fluide nettoyant (2).
